# EUROPÄISCHE PATENTSCHRIFT

(11) **EP 2 496 464 B1**
(45) Veröffentlichungstag und Bekanntmachung des Hinweises auf die Patenterteilung: **15.01.2014**
(21) Anmeldenummer: 10774197.7
(22) Anmeldetag: 29.10.2010
(51) Int. Cl.: B62D 25/08, B62D 29/00, B29C 45/16

(54) **KRAFTFAHRZEUG-FRONTEND**
FRONT END OF A MOTOR VEHICLE
BLOC AVANT D'UN VEHICULE A MOTEUR

(30) Priorität: 05.11.2009 DE 102009052110
(43) Veröffentlichungstag der Anmeldung: 12.09.2012
(73) Patentinhaber: Faurecia Kunststoffe Automobilsysteme GmbH, 85080 Gaimersheim (DE); LANXESS Deutschland GmbH, 50569 Köln (DE)
(72) Erfinder: MALEK, Thomas, 50259 Pulheim (DE); PEDNEKAR, Vasant, Corapolis, PA 15108 (US); DAJEK, Ulrich, 51375 Leverkusen (DE); WEYER, Hans-Walter, 51467 Bergisch Gladbach (DE); MENKE, Jens, 90584 Allersberg (DE); COTTENS, Bérénice, 25000 Besançon (FR)
(74) Vertreter: Richardt Patentanwälte GbR
(86) Internationale Anmeldenummer: PCT/EP2010/066484
(87) Internationale Veröffentlichungsnummer: WO 2011/054754

(56) Entgegenhaltungen:
- EP-A1- 1 213 207
- EP-A1- 1 884 451
- US-A1- 2002 109 263

## Beschreibung

Die Erfindung betrifft ein Kraftfahrzeug-Frontend bestehend aus wenigstens einem Grundkörper und wenigstens einem ersten thermoplastischen Kunststoffteil und einem zweiten thermoplastischen Kunststoffteil, die durch Spritzguss einerseits mit dem Grundkörper fest verbunden sind und gleichzeitig die verschiedenen Kunststoffteile miteinander verbunden sind, wobei die beiden Kunststoffteile aus unterschiedlichen Kunststoffmaterialien bestehen, diese nach dem Bi-Injektionsverfahren verspritzt werden und beim Aufeinandertreffen miteinander verschmelzen.

Kraftfahrzeug-Frontends in Kunststoff-Metall-Hybridbauweise herzustellen ist aus dem Stand der Technik bekannt.

WO 02/064 343 A1 offenbart den Oberbegriff des Anspruchs 1.

Sowohl EP 1 211 163 A2, EP 1 211 164 A2 als auch EP 1 213 207 A1 beschreiben solche Frontends aus einem oberen Metaltträger und einen unteren Metallträ-ger, die durch Kunststoffsegmente miteinander verbunden werden.

Auch FR 2 805 504 A1 beschreibt ein Frontend für Automobile mit zusätzlichen Schockabsorbem, worin ein Metall-Kunststoff-Komposit zum Einsatz kommen kann.

In der Folge wurden weitere Kraftfahrzeug Frontends entwickelt um Zusatzaufgaben zu übernehmen wie die Aufnahme einer Stoßfängereinheit gemäß WO 02/36414 A1 oder einer Fußgängerschutzvorrichtung gemäß DE 10 2004 030 794 A1. Auch hierbei wird auf die Ausgestaltung des Bauteils als Metall-KunststoffVerbund verwiesen.

Die Aufnahme weiterer Funktionselemente wie die Integration einer Crash-Box oder der Einbau eines im Crash-Falle deformierbaren Außenhautelements wird gemäß EP 2 039 592 A1 oder EP 1 627 800 A2 ebenfalls durch die Metall-Kunststoff-Hybridtechnologie ermöglicht.

Nachteilig an den im Stand der Technik beschriebenen Kraftfahrzeug-Frontends ist die Tatsache, dass im Falle verschiedener zu erfüllender Funktionen Funktionselemente mit ein und demselben Kunststoff an das Frontend angespritzt werden. In EP 1 211 164 A2 dient ein und derselbe Kunststoff dazu den oberen Träger mit dem unteren Träger miteinander zu verbinden und gleichzeitig als Rahmen für die Scheinwerfer oder Befestigungspunkt für das Haubenschloss. Trotz unterschiedlichster Funktionen wird nur ein Kunststoff eingesetzt.

In WO 02/064 343 A1 wird deshalb durch Einsatz von Mehrkomponentenspritzguss ein Frontmodul eines Kraftfahrzeugs hergestellt, bei dem der Grundkörper aus Stahlblech, die Scheinwerferträger aus einem unverstärkten amorphen thermoplastischen Kunststoffmaterial wie beispielsweise Polycarbonat-ABS-Mischung und der Kühlmodulträger aus einem glasfaserverstärkten Thermoplasten wie Polyamid besteht.

In der Mehrkomponententechnik unterscheidet man zwischen
- Bi-Injektion, also ein zeitgleiches oder zeitversetztes Einspritzen zweier oder mehrerer Komponenten in dieselbe Kavität.
- Core-Back-Verfahren, also das Einspritzen zweier oder mehrerer Komponenten in Folge, wobei der Hohlraum für die 2. Komponente durch Ziehen eines Sperrschiebers freigestellt wird.
- Umsetz-Verfahren, also mit einem Vorspritzling der in eine 2. Kavität oder in einer 2. Maschine umgesetzt wird bevor die 2. Komponente eingespritzt wird.
- Sandwich-Verfahren, also dem Schichtaufbau mit Außenhaut / Kern, wobei die Schichten nacheinander eingespritzt werden.

Ein Nachteil des in WO 02/064 343 A1 eingesetzten Bauteils ist die erforderliche Vergrößerung/Erweiterung des Grundkörpers um die Kavitäten voneinander zu trennen. Dadurch wird der bedarfsgerechte Einsatz der Kunststoffkomponenten auf die Bereiche um den Grundkörper limitiert. Der Übergang von einer Kunststoffkomponente zur anderen Kunststoffkomponente kann demnach nicht ohne lokal vorhandenen Grundkörper bewerkstelligt werden. Somit wird der Grundkörper auch in weniger belastete Bereiche hin erweitert. Das Gewicht-Einsparungspotential kann hier nicht optimal/vollständig ausgenutzt werden.

Aufgabe der Erfindung ist es ein Kraftfahrzeug-Frontend bereitzustellen, das eine gegenüber dem Stand der Technik weitere Gewichtseinsparung ermöglicht ohne Abstriche in der Funktionalität hinnehmen zu müssen und das bei gleicher mechanischer Leistungsfähigkeit.

Die Aufgabe wird erfindungsgemäß dadurch gelöst, indem man ein durch Bi-Injektion hergestelltes Kraftfahrzeug -Frontend bereitstellt wobei ein oder mehrere Teile eines Grundkörpers in ein Spritzgießwerkzeug eingelegt werden und die verschiedenen Kunststoffteile einerseits mit dem Grundkörper verbunden sind, und gleichzeitig bzw. andererseits die verschiedenen Kunststoffteile einen festen Verbund miteinander eingehen. Dadurch ist ein simultanes Einspritzen verschiedener Kunststoffe in dieselbe(n) Kavität(en) möglich und man erhält ein Strukturbauteil mit einer Kunststoff-Komponente oder wahlweise eine Kunststoff-Metall-Hybridkomponente für hochbelastete Bereiche sowie eine Kunststoff-Komponente aus einem anderen Material für weniger belastete oder unbelastete Funktionsbereiche.

Gegenstand der Erfindung ist ein Kraftfahrzeug-Frontend bestehend aus wenigstens einem Grundkörper, bevorzugt aus Metall oder einem hochfesten Kunststoff-material, insbesondere bevorzugt aus Metall, und wenigstens einem ersten thermoplastischen Kunststoffteil und einem zweiten thermoplastischen Kunststoffteil, die durch Spritzguss einerseits mit der Oberfläche des Grundkörpers fest verbunden sind und gleichzeitig die verschiedenen Kunststoffteile einen festen Verbund miteinander eingehen, wobei die beiden Kunststoffteile aus unterschiedlichen Kunststoffmaterialien bestehen und diese beim Aufeinandertreffen im Bi-Injektionsverfahren miteinander verschmelzen.

Man erhält das erfindungsgemäße Kraftfahrzeug-Frontend durch Einlegen des oder der Grundkörper(s) in ein Mehrkomponenten-Spritzgießwerkzeug mit mindestens zwei getrennten Schmelzeleitsystemen und mindestens einer Kavität und anschließendes simultanes Einspritzen der verschiedenen Kunststoffe in dieselbe Kavität oder dieselben Kavitäten, wobei wenigstens ein Kunststoff mit der Oberfläche des Grundkörpers eine feste Verbindung mit diesem eingeht aber auch die beiden verschiedenen Kunststoffe eine feste Verbindung miteinander eingehen.

Zur Klarstellung sei angemerkt, dass vom Rahmen der Erfindung alle im Rahmen der vorliegenden Beschreibung aufgeführten, allgemeinen oder in Vorzugsbereichen genannten Definitionen und Parameter in beliebigen Kombinationen umfasst sind.

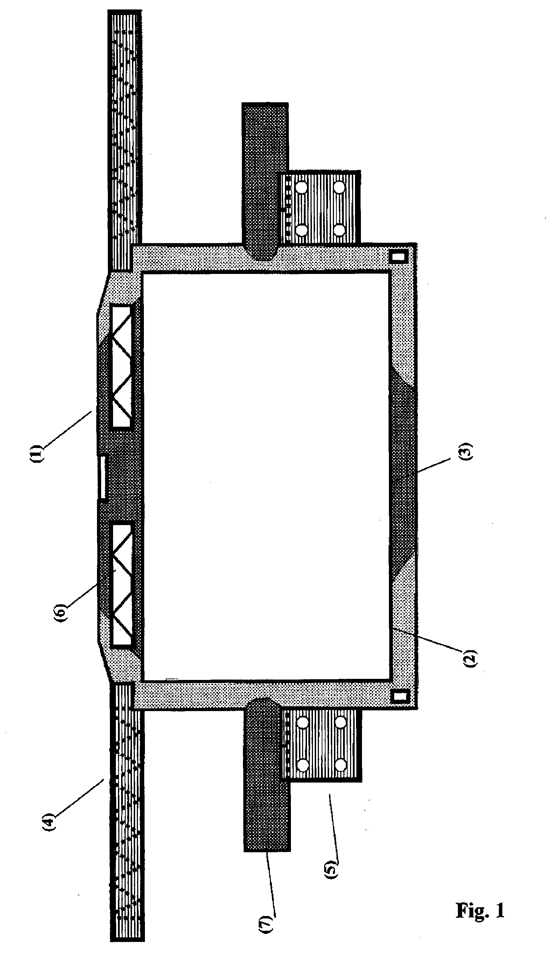

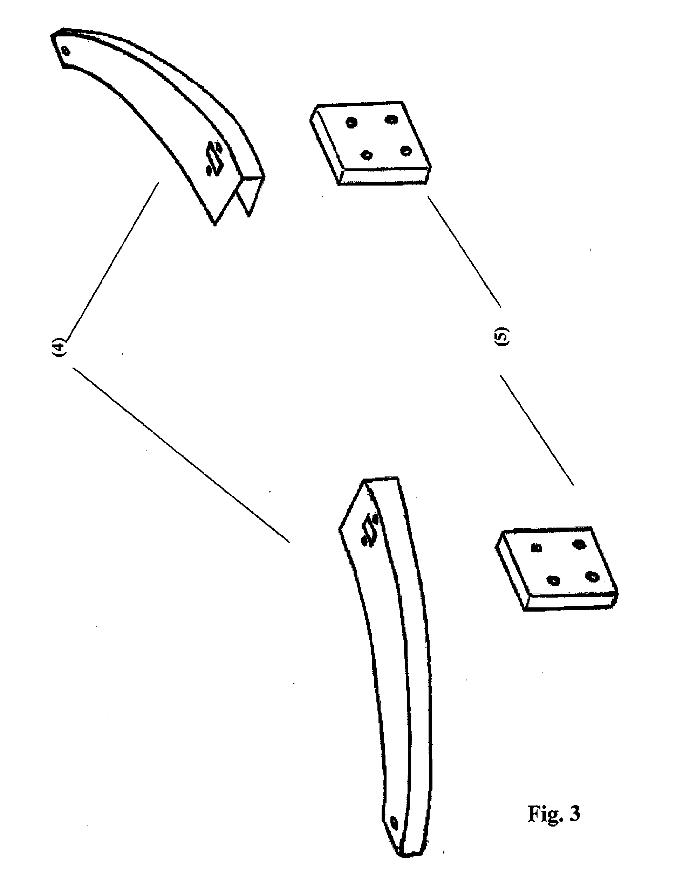

Ein erfindungsgemäßes Kraftfahrzeug-Frontend kann beispielsweise gemäß Fig. 1 ausgebildet sein, worin die unterschiedlich schraffierten Bereiche verschiedene Kunststoffe darstellen und die zick-zack-förmigen Darstellungen angespritzte Verstärkungsrippen darstellen. Die für ein solches beispielhaftes Kraftfahrzeug-Frontend erforderlichen Grundkörper aus Metall sind in Fig. 3 dargestellt. In Fig. 1 sind an diese Grundkörper Rippen und Randumspritzungen aus verschiedenen Kunststoffen angespritzt.

In einer bevorzugten Ausführungsform betrifft die vorliegende Erfindung ein Kraftfahrzeug-Frontend, das aus einem oberen Frontendträger besteht, der wiederum aus wenigstens einem Grundkörper, bevorzugt aus Metall besteht. In einer weiteren bevorzugten Ausführungsform betrifft die Erfindung ein Kraftfahrzeug-Frontend, bei dem ein mehrteiliger Grundkörper verwendet wird, wobei durch das Spritzgießen die einzelnen Teile des Grundkörpers über ein thermoplastisches Kunststoffteil miteinander verbunden werden.

In einer besonders bevorzugten Ausführungsform handelt es sich um ein Kraftfahrzeug-Frontend aus einem oberen Frontendträger mit wenigstens zwei vertikal mit diesem verbundenen Seitenträgern, die ein auf dem Kopf stehendes U mit einem Aufnahmeraum für ein Kühlmodul bilden.

Ganz besonders bevorzugter Gegenstand der Erfindung ist ein Kraftfahrzeug-Frontend mit einer formschlüssigen Verbindung wenigstens eines Kunststoffes mit dem Grundkörper, insbesondere mit einer Kante des Grundkörpers, die eine Verschiebung dieses Kunststoffteiles auf dem Grundkörper in mindestens einer Richtung vorzugsweise in Längsrichtung des Kunststoffteils ermöglicht. In einem Guss können somit auf dem Grundkörper Bereiche die in der späteren Anwendung einer hohen Belastung ausgesetzt sind, sowie Bereiche die in der späteren Anwendung einer geringeren Belastung ausgesetzt sind, durch die Auswahl verschiedener Kunststoffe aufgebracht bzw. hergestellt werden.

In einer weiteren ganz besonders bevorzugten Ausführungsform ist der obere Frontendträger zu beiden Seiten hin, wie in Fig. 1 dargestellt, durch zwei Anbindungsträger verlängert.

In einer insbesondere ganz besonders bevorzugten Ausführungsform ist der Aufnahmeraum für das Kühlmodul zusätzlich durch einen unteren Frontendträger begrenzt, der wiederum mit den beiden Seitenträgern und dem oberen Frontendträger ein rechteckiges Kraftfahrzeug-Frontend bildet.

In weiteren bevorzugten Ausführungsformen kann das erfindungsgemäße Kraft-fahrzeug-Frontend wie in Fig. 1 dargestellt an den Seitenträgem angebrachte zusätzliche vertikale Frontendträger 4 zur Befestigung von Montageflanschen (siehe Fig. 1 dargestellt als Rechteck mit jeweils vier Bohrungen) aufweisen.

Gemäß Fig. 3 werden bevorzugt Montageflansche aus Metall eingesetzt, die gemäß Fig. 1 mit Kunststoffrippen umspritzt werden.

Darüber hinaus können beim erfindungsgemäßen Kraftfahrzeug-Frontend in einer weiteren bevorzugten Ausführungsform zusätzliche Funktionalitäten durch entsprechendes Anspritzen eines Kunststoffes vorgesehen werden.

Zusätzliche Funktionalitäten gemäß der vorliegenden Erfindung sind insbesondere Haubenschloss, Crash-Box(en), Scheinwerferträger oder Mittelstreben die den Kühlmodul-Aufnahmeraum unterteilen.

In einer weiteren bevorzugten Ausführungsform sind die Anbindungsträger am oberen Frontendträger durch eine rippenförmige Verstärkungsstruktur mit diesem verbunden, die ebenfalls aus angespritztem Kunststoff besteht (siehe Fig. 1).

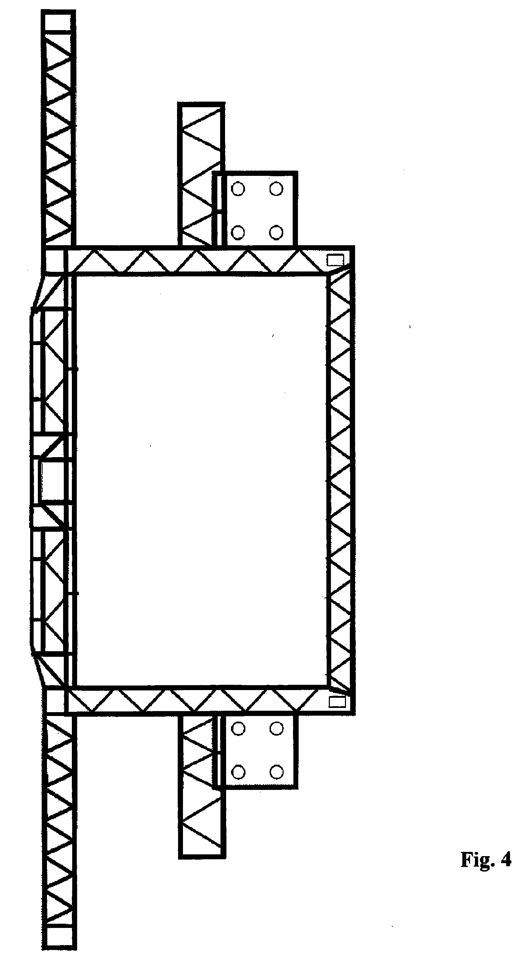

In einer weiteren bevorzugten Ausführungsform sind zusätzlich die Seitenträger und/oder der untere Frontendträger sowie weitere Funktionselementanbindungen und/oder Seitenträger durch rippenförmige, angespritzte Verstärkerstrukturen verstärkt (siehe rückwärtige Ansicht eines erfindungsgemäßen Frontends in Fig. 4).

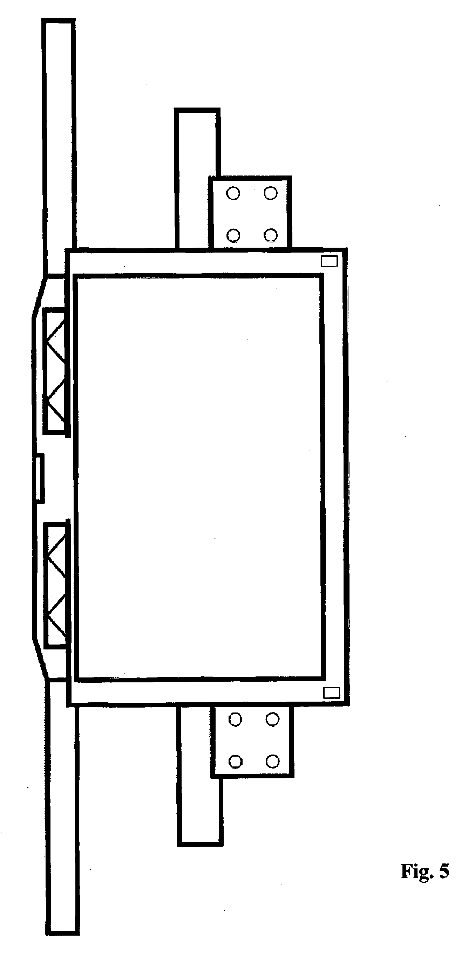

Fig. 5 zeigt dasselbe Kraftfahrzeug-Frontend gemäß Fig. 4 in der Ansicht von vorne.

In einer insbesondere bevorzugten Ausführungsform sind der obere Frontendträger, die Anbindungsträger, die Seitenträger sowie der unter Frontendträger schalenförmig ausgestaltet, so dass diese die aus Kunststoff hergestellte Rippenstruktur aufnehmen können. Zur Ausgestaltung solcher Bauteile sei beispielsweise auf EP 0 370 342 A1 verwiesen.

Bevorzugt wird als Metall für den oder die Grundkörper ein Metall der Reihe Stahl, Aluminium oder Magnesium oder eine Legierung dieser Metalle mit anderen Metallen verwendet. In einer alternativen Ausführungsform kann der Grundkörper aber auch aus einem hochfesten Kunststoffmaterial, insbesondere aus Organoblech bestehen. Die Herstellung von Organoblech wird beispielsweise in DE 10 2004 060 009 A1 beschrieben.

Erfindungsgemäß werden wenigstens zwei verschiedene Kunststoffe durch Spritzguss sowohl mit dem Grundkörper als auch miteinander nach dem Bi-Injektionsverfahren fest verbunden. Dem Fachmann ist das Bi-Injektionsverfahren bekannt. In den weiteren Ausführungen wird der Anschaulichkeit halber von zwei thermoplastischen Kunststoffen ausgegangen, was nicht ausschließt, dass die vorliegende Erfindung die Kombination durchaus mehrerer Kunststoffe miteinander umfasst.

Bevorzugt betrifft die vorliegende Erfindung ein Kraftfahrzeug-Frontend, bei dem die Verschmelzung der beiden Kunststoffe während des Bi-Injektionsverfahrens innerhalb derselben Kavität, wo sie aufeinander treffen, erfolgt.

Als zu verspritzender, thermoplastischer Kunststoff wird bevorzugt wenigstens ein Kunststoff aus der Reihe Polyamid, Polyester, Polypropylen oder mögliche Mischungen der genannten Polymere ausgewählt.

Mehrere Kunststoffe oder unterschiedliche Kunststoffe im Sinne der vorliegenden Erfindung bedeuten wenigstens zwei verschiedene Kunststoffe, wobei als verschiedene Kunststoffe Polymere der oben genannten Reihe aber auch Kunststoffe auf Basis desselben Polymers jedoch mit unterschiedlichem Füllstoffanteil und/oder Verstärkungsstoffanteil zu verstehen sind.

In einer Ausführungsvariante wird ein mehrteiliger Grundkörper verwendet, wobei durch das Spritzgießen die einzelnen Teile des Grundkörpers über ein thermoplastisches Kunststoffteil miteinander verbunden werden und das auf diese Weise hergestellte Kraftfahrzeug-Frontend, in Bereichen die in einer späteren Anwendung hohen Belastungen ausgesetzt sind, einen anderen Kunststoff aufweist als in Bereichen, die in einer späteren Anwendung geringeren Belastungen ausgesetzt sind, wobei die verschiedenen Kunststoffe miteinander eine feste Verbindung eingehen.

Verschiedene thermoplastische Kunststoffe im Sinne der vorliegenden Erfindung sind nicht nur Kunststoffe die aufgrund ihres chemischen Aufbaus verschieden sind, sondern auch Kunststoffe auf Basis desselben Polymers, wovon einer einen geringeren, der andere einen höheren Füllstoffanteil oder Verstärkungsstoffanteil aufweist.

In einer Ausführungsvariante betrifft die vorliegende Erfindung deshalb auch Kraft-fahrzeug-Frontends der oben beschriebenen Weise, wobei das Kunststoffmaterial des ersten Kunststoffteiles sich vom Kunststoff des zweiten Kunststoffteiles durch den Anteil an Füllstoffen und/oder Verstärkungsstoffen unterscheidet. Erfindungsgemäß kann aber jedes der oben genannten Polymere mit Füll- und/oder Verstärkungsstoffen versehen werden.

Im Falle des Einsatzes von Füllstoffen und/oder Verstärkungsstoffen werden Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffe auf der Basis von Kohlenstofffasern und/oder Glasfasern bevorzugt. Besonders bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Insbesondere bevorzugt werden mineralische teilchenförmige Füllstoffe auf der Basis von Talk, Wollastonit, Kaolin und/oder Glasfasern, insbesondere besonders bevorzugt Glasfasern, eingesetzt.

Insbesondere für Anwendungen, in denen Isotropie bei der Dimensionsstabilität und eine hohe thermische Dimensionsstabilität gefordert wird, werden bevorzugt mineralische Füllstoffe eingesetzt, insbesondere Talk, Wollastonit oder Kaolin.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge: Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Diese Vorbehandlung ist jedoch nicht unbedingt erforderlich. Insbesondere bei Verwendung von Glasfasern können aber zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind Silanverbindungen, bevorzugt Silanverbindungen der allgemeine Formel (I)

(X-(CH₂)_{q})ₖ-Si-(O-CᵣH₂ᵣ₊₁)₄₋ₖ (I)

worin
- X: für NH₂-, HO- oder 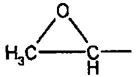 steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

Ferner bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können, bedingt durch die Verarbeitung zur Formmasse bzw. Formkörper, in der Formmasse bzw. im Formkörper kürzere Längenverteilungen als ursprünglich eingesetzt aufweisen.

Die verschiedenen Kunststoffe können die Füllstoffe zu jeweils 0,001 bis 70 Gew.-Teilen, vorzugsweise 15 bis 65 Gew.-Teilen, besonders bevorzugt 30 bis 60 Gew.-Teilen, insbesondere bevorzugt 30-65 Gew.-Teilen einzeln oder im Gemisch mit anderen Füllstoffen/Verstärkungsstoffen enthalten.

In jedem Fall ist die Menge an Füllstoff bei Einsatz desselben Polymers in den zu verwendenden Kunststoffen verschieden. Sie kann aber bei Einsatz verschiedener Polymere in den beiden Kunststoffen durchaus zu gleichen Anteilen vorliegen.

Im Falle, dass in beiden Kunststoffen derselbe thermoplastische Polymer eingesetzt wird, beträgt der Unterschied im Füllstoffgehalt beider thermoplastischer Kunststoffe 0 : 70 bis 70 : 0, bevorzugt 15 : 65 bis 65 : 15, besonders bevorzugt 30 : 60 bis 60 : 30 Gew.-Teile.

Im Falle des Einsatzes verschiedener Kunststoffe werden als thermoplastische Polymere bevorzugt Kombinationen der Reihe PA-PBT, PA-PP, worin PA für Polyamid, PBT für Polybutylenterephthalat und PP für Polypropylen stehen, eingesetzt.

In einer bevorzugten Ausführungsform können die zu verwendenden thermoplastischen Kunststoffe wenigstens einen Compatibilizer enthalten, eine Materialkomponente, die es über einen physikalischen Vorgang gestattet, kritische Materialien wie beispielsweise Polypropylen zum Polyamid bzw. auch umgekehrt zu verbinden. Zu verwendende Compatibilizer werden beispielsweise in DE 4 206 191 A1 oder US 6 541 571 B1 beschrieben.

Erfindungsgemäß bevorzugt einzusetzende Polyamide sind teilkristalline Polyamide (PA), die ausgehend von Diaminen und Dicarbonsäuren und/oder Lactamen mit wenigstens 5 Ringgliedern oder entsprechenden Aminosäuren hergestellt werden können. Als Edukte kommen dafür aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclo-hexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Erfindungsgemäß bevorzugte Polyamide werden aus Caprolactamen, ganz besonders bevorzugt aus ε-Caprolactam sowie die meisten auf PA6, PA66 und auf anderen aliphatischen und/oder aromatischen Polyamiden bzw. Copolyamiden basierenden Compounds, bei denen auf eine Polyamidgruppe in der Polymerkette 3 bis 11 Methylengruppen kommen, hergestellt.

Erfindungsgemäß einzusetzende teilkristalline Polyamide können auch im Gemisch mit anderen Polyamiden und/oder weiteren Polymeren eingesetzt werden.

Den Polyamiden können übliche Additive, bevorzugt Entformungsmittel, Stabilisatoren und/oder Fließhilfsmittel, in der Schmelze zugemischt oder auf der Oberfläche aufgebracht werden.

Erfindungsgemäß ebenfalls bevorzugt einzusetzende Polyester sind Polyester auf Basis von aromatischen Dicarbonsäuren und einer aliphatischen oder aromatischen Dihydroxyverbindung.

Eine erste Gruppe bevorzugter Polyester sind Polyalkylenterephthalate, insbesondere solche mit 2 bis 10 C-Atomen im Alkoholteil.

Derartige Polyalkylenterephthalate sind in der Literatur beschrieben. Sie enthalten einen aromatischen Ring in der Hauptkette, der von der aromatischen Dicarbonsäure stammt. Der aromatische Ring kann auch substituiert sein, bevorzugt durch Halogen, insbesondere Chlor und Brom, oder durch C₁-C₄-Alkylgruppen, insbesondere Methyl, Ethyl-, i- bzw. n-Propyl- und n-, i- bzw. t-Butylgruppen.

Diese Polyalkylenterephthalate können durch Umsetzung von aromatischen Dicarbonsäuren, deren Ester oder anderen esterbildenden Derivaten mit aliphatischen Dihydroxyverbindungen in bekannter Weise hergestellt werden.

Als bevorzugte Dicarbonsäuren sind 2,6-Naphthalindicarbonsäure, Terephthalsäure und Isophthal- säure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbon-Säuren ersetzt werden.

Von den aliphatischen Dihydroxyverbindungen werden Diole mit 2 bis 6 Kohlenstoffatomen, ins-besondere 1,2-Ethandiol, 1,3-Propandiol, 1,4-Butadiol, 1,6-Hexandiol, 1,4-hexandiol, 1,4-Cyclohexandiol, 1,4-Cyclohexandimethanol und Neopentylglykol oder deren Mischungen bevorzugt.

Als insbesondere besonders bevorzugt einzusetzende Polyester sind Polyalkylenterephthalate, die sich von Alkandiolen mit 2 bis 6 C-Atomen ableiten, zu nennen. Von diesen werden insbesondere Polyethylenterephthalat (PET), Polypropylenterephthalat und Polybutylenterephthalat (PBT) oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-pentandiol als weitere Monomereinheiten enthalten.

Die Viskositätszahl der erfindungsgemäß bevorzugt einzusetzenden Polyester liegt im Allgemeinen im Bereich von 50 bis 220, vorzugsweise von 8 bis 160 (gemessen in einer 0,5 gew.-%igen Lösung in einem Phenol/o-Dichlorbenzolgemisch (Gew.-Verh. 1:1 bei 25°C) gemäß ISO 1628.

Insbesondere bevorzugt sind Polyester, deren Carboxyl-Endgruppengehalt bis zu 100 mval/kg, bevorzugt bis zu 50 mvallkg und insbesondere bevorzugt bis zu 40 mval/kg Polyester beträgt. Derartige Polyester können beispielsweise nach dem Verfahren der DE-A 44 01 055 hergestellt werden. Der Carboxyl-Endgruppengehalt wird üblicherweise durch Titrationsverfahren (z.B. Potentiometrie) bestimmt.

Im Falle des Einsatzes von Polyestermischungen enthalten die Formmassen eine Mischung aus Polyestern, also zusätzlich Polyester die verschieden von PBT sind, wie beispielsweise Polyethylenterephthalat (PET).

Weiterhin ist es vorteilhaft Rezyklate wie beispielsweise PA-Rezyklate oder PET-Rezyklate (auch scrap-PET genannt) gegebenenfalls in Mischung mit Polyalkylenterephthalaten wie PBT einzusetzen.

Unter Rezyklaten versteht man im Allgemeinen:
1) sogenannte Post Industrial Rezyklate: hierbei handelt es sich um Produktionsabfalle bei der Polykondensation oder bei der Verarbeitung anfallende Angüsse bei der Spritzgussverarbeitung, Anfahrware bei der Spritzgussverarbeitung oder Extrusion oder Randabschnitte von extrudierten Platten oder Folien.
2) Post Consumer Rezyklate: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Rezyklat-Arten können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise < 0,2 %, insbesondere < 0,05%.

Als weitere Gruppe bevorzugt einzusetzender Polyester sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten be- schriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel (11) 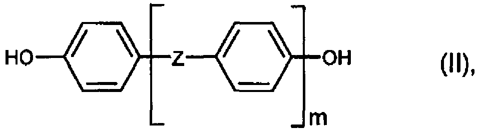 in der
- Z: eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der
- m: den Wert 0 bis 2 hat.

Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seien beispielsweise Dihydroxydiphenyl, Di- (hydroxyphenyl)alkan, Di-(hydroxyphenyl)cycloalkan, Di-(hydroxyphenyl)sulfid, Di-(hydroxyphenyl)ether, Di-(hydroxyphenyl)keton, Di-(hydroxyphenyl)sulfoxid, α,α'-Di-(hydroxyphenyl)-dialkylbenzol, Di-(hydroxyphenyl)sulfon, Di-(hydroxybenzol)benzol, Resorcin und Hydrochinon sowie deren kernalkylierte oder kernhalogenierte Derivate genannt.

Von diesen werden 4,4'-Dihydroxydiphenyl, 2,4-Di-(4'-hydroxypheny1)-2-methylbutan, α,α'-Di-(4-hydroxypheny1)-p-diisopropylbenzol, 2,2-Di-(3'-methyl-4'-hydroxypheny1)propan und 2,2-Di-(3'-chlor-4'-hydroxyphenyl)propan, sowie insbesondere 2,2-Di-(4'-hydroxyphenyl)propan, 2,2-Di- phenon, 4,4'-Dihydroxydiphenylsulfon und 2,2-Di(3',5'-dimethy14'-hydroxyphenyl)propan oder deren Mischungen bevorzugt.

Selbstverständlich kann man auch Mischungen von Polyalkylenterephthalaten und vollaromatischen Polyestern einsetzten. Diese enthalten im Allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind bekannt und in der Literatur, z.B. in der US-A 3 651 014, beschrieben. Auch im Handel sind entsprechende Produkte erhältlich, z.B. Hytrel^{®} (DuPont).

Als Polyester bevorzugt einzusetzende Materialien sollen erfindungsgemäß auch halogenfreie Polycarbonate verstanden werden. Geeignete halogenfreie Polcarbonate sind beispielsweise solche auf Basis von Diphenolen der allgemeinen Formel (III) 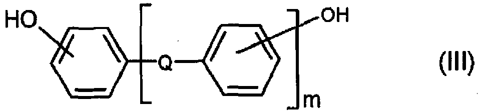 worin
- Q: eine Einfachbindung, eine C₁- bis C₈-Alkylen-, eine C₁- bis C₃-Alkyliden-, eine C₃- bis C₆- Cycloallcylidengruppe, eine C₆- bis C₁₂-Arylengruppe sowie -O-, -S- oder -SO₂- bedeutet und m eine ganze Zahl von 0 bis 2 ist.

Die Diphenole können an den Phenylenresten auch Substituenten wie C₁- bis C₆-Alkyl oder C₁- bis C₆-Alkoxy haben.

Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxypheny1)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1 -Bis-(4-hydroxyphenyl)-3,3,5-trimethylcyclohexan.

Sowohl Homopolycarbonate als auch Copolycarbonate sind geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, insbesondere solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000 g/mol.

Die Diphenole der allgemeinen Formel sind bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-Di-t-Butylphenol, p-t-Octylphenol, p-Dodecylphenol, 2-(3,5-Dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasen-grenzflächenverfahren, nicht als halogenhaltig im Sinne der Erfindung anzusehen ist. Derartige Polycarbonate mit ppm-Gehalten an verseifbarem Chlor sind halgoenfreie Polycarbonate im Sinne der vorliegenden Erfindung.

Als weitere thermoplastische Polymere seien amorphe Polyestercarbonate genannt, wobei Phosgen gegen aromatische Dicarbonsäureeinheiten wie Isopshthalsäure und/oder Terephthalsäureeinheiten, bei der Herstellung ersetzt wurde. Für nähere Einzelheiten sei an dieser Stelle auf die EP-A 0 711 810 verwiesen.

Weitere geeignete Copolycarbonate mit Cycloalkylresten als Monomereinheiten sind in der EP-A 0 365 916 beschrieben.

Weiterhin kann Bisphenol A durch Bisphenol TMC ersetzt werden. Derartige Polycarbonate sind unter dem Warenzeichen APEC HT^{®} der Firma Bayer AG erhältlich.

In einem weiteren Aspekt betrifft die Erfindung ein Verfahren zur Herstellung eines Kraftfahrzeug-Frontends mit wenigstens einem Grundkörper und wenigstens einem ersten thermoplastischen Kunststoffteil und einem zweiten thermoplastischen Kunststoffteil, wobei das erste und zweite Kunststoffteil aus unterschiedlichen Kunststoffmaterialien bestehen, wobei das Frontend durch ein Spritzgussverfahren hergestellt wird, wobei es sich bei dem Spritzgussverfahren um ein Bi-Injektionsverfahren handelt, wobei durch das Spritzgussverfahren das erste und zweite thermoplastischen Kunststoffteil hergestellt werden und dabei fest mit der Oberfläche des Grundkörpers verbunden werden, wobei durch das Spritzgussverfahren gleichzeitig die verschiedenen Kunststoffmaterialien beim Aufeinandertreffen miteinander Verschmelzen und dadurch einen festen Verbund miteinander eingehen.

Nach einer Ausführungsform der Erfindung geht wenigstens einer der Kunststoffe der Kunststoffteile mit dem Grundkörper eine formschlüssige Verbindung ein.

Nach einer Ausführungsform der Erfindung geht wenigstens einer der Kunststoffe der Kunststoffteile mit einer Kante des Grundkörpers, die eine Verschiebung dieses Kunststoffteiles auf dem Grundkörper in mindestens einer Richtung vorzugsweise in Längsrichtung des Kunststoffteils ermöglicht, die formschlüssige Verbindung ein.

Nach einer Ausführungsform der Erfindung erfolgt die Verschmelzung der beiden verschiedenen Kunststoffe innerhalb derselben Kavität(en) wo sie aufeinander treffen.

Nach einer Ausführungsform der Erfindung besteht der Grundkörper aus Metall oder einem hochfesten Kunststoffmaterial.

Nach einer Ausführungsform der Erfindung werden als Metall für den Grundkörper Stahl, Aluminium oder Magnesium oder Legierungen dieser Metalle mit anderen Metallen verwendet.

Nach einer Ausführungsform der Erfindung wird als Kunststoff wenigstens ein Kunststoff aus der Reihe Polyamid, Polyester, Polypropylen oder mögliche Mischungen der genannten Polymere ausgewählt.

Nach einer Ausführungsform der Erfindung unterscheiden sich die zu verarbeitenden Kunststoffmaterialien sich durch den Anteil an Füllstoffen und/oder Verstärkungsstoffen.

Nach einer Ausführungsform der Erfindung wird ein mehrteiliger Grundkörper verwendet, wobei durch das Spritzgießen die einzelnen Teile des Grundkörpers über eines der thermoplastisches Kunststoffteile miteinander verbunden werden.

In einem weiteren Aspekt betrifft die Erfindung ein Kraftfahrzeug-Frontend, hergestellt nach einem Verfahren wie obig beschrieben.

Die Erfindung wird nachfolgend anhand der Figuren durch die Beispiele, welche jedoch keine Beschränkung der Erfindung darstellen, näher erläutert.

Es zeigen:
- Fig. 1: zeigt die Tragestruktur für ein erfindungsgemäßes Kraftfahrzeug-Frontend bestehend aus dem Grundkörper (1) aus 4 Stahlblechen, aus einem glasfaserverstärkten thermoplastischen Kunststoff (Polyamid) mit 30% Glasfasern (2) und aus einem glasfaserverstärkten thermoplastischen Kunststoff (Polyamid) mit 60% Glasfasern (3).
- Fig. 2: Kraftfahrzeug-Frontend gemäß Fig. 1 mit Darstellung des Angusssystems für das Bi-Injektionsverfahren.
- Fig. 3: Grundkörper als mehrteiliger Metalleinleger für das Kraftfahrzeug-Frontend gemäß Fig. 1 und Fig. 2.
- Fig. 4: Ansicht des Kraftfahrzeug-Frontends gemäß Fig. 1 von hinten mit gerippten Verstärkungsstrukturen.
- Fig. 5: Fig 1 in der Vorderansicht ohne Darstellung der verschiedenen Kunststoffe.

### Beispiele

Die Figur 1 zeigt die Tragestruktur für ein erfindungsgemäßes Kraftfahrzeug-Frontend bestehend aus dem Grundkörper 1 aus vier Stahlblechen 4 und 5, aus einem glasfaserverstärkten thermoplastischen Kunststoff (Polyamid) mit 30% Glasfasern 2 und aus einem glasfaserverstärkten thermoplastischen Kunststoff (Polyamid) mit 60% Glasfasern 3. Der schalenförmige Grundkörper 1 besteht vorzugsweise aus tiefgezogenem Stahlblech, Aluminiumblech oder auch Kunststoff.

Der Grundkörper 1 ist in Figur 3 im Detail dargestellt. Wie aus Fig. 3 ersichtlich, umfasst der Grundkörper zwei vertikale Frontendträger 5, welche Befestigungslöcher zur Befestigung an der Kraftfahrzeugkarosserie aufweisen. Weiter umfasst der Grundkörper die beiden bezüglich der Zeichenebene der Fig. 3 nach hinten gebogenen Anbindungsträger 4, welche ebenfalls dazu verwendet werden können, das Frontend an der Kraftfahrzeugkarosserie festzulegen.

Sowohl die Stahlbleche der vertikalen Frontendträger 5, als auch die Stahlbleche der Anbindungsträger 4 stehen seitlich von dem Rahmen ab, welcher durch die beiden miteinander verschmolzenen Kunststoffe 2 und 3 gebildet wird. In der Fig. 1 ist der Rahmen rechteckig - allerdings ist hier eine beliebige Rahmenstruktur, z. B. in Trapezform ebenfalls möglich.

Die beiden Kunststoffe 2 und 3 weißen z.B. eine unterschiedliche Härte auf, so dass sie in optimaler Weise zur Versteifung einzelner Segmente der Tragestruktur dienen können. So sind in Fig. 1 die mittleren Bereiche durch den Kunststoff 3 gebildet, welcher einen wesentlich höheren Glasfaseranteil als der Kunststoff 2 in den übrigen Bereichen hat. Dadurch sind die mittleren Bereiche besonders verstärkt.

Entscheidend in Fig. 1 ist nun, dass der Grundkörper 1 zumindest teilweise von den Kunststoffen 2 und/oder 3 umspritzt ist. Zusätzlich sind einige Bereiche des Grundkörpers 1 durch gerippte Verstärkungsstrukturen versteift, was im Detail in der Fig. 4 zu sehen ist. Fig. 4 stellt dabei die rückwärtige Ansicht von Fig. 1 dar. Durch die Rippenstruktur wird die Stabilität der Tragestruktur erhöht. Wie ferner aus Fig. 4 ersichtlich, sind alle Elemente der Tragestruktur, welche Kunststoffe aufweisen, mit der Rippenstruktur versehen.

Die Bereiche 6 der Tragestruktur sind Aussparungen im Kunststoff, welche z.B. der Luftführung dienen. Damit die Stabilität der Tragestruktur trotz Aussparungen gewährleistet bleibt, sind auch die Aussparungen mit Verstärkungsrippen versehen.

Ferner in Fig. 1 ersichtlich sind weitere Führungsteile 7 aus Kunststoff, welche seitlich vom Kunststoffrahmen abstehen. Diese Führungsteile dienen z.B. der Anbindung von Stoßfängern bzw. als Träger für die Scheinwerfer. Die Führungsteile sind in Fig. 1 ebenfalls aus dem hochfesten Kunststoff 3 hergestellt und zusammen mit dem Kunststoff 2 der seitlichen Rahmenteile verschmolzen.

Als Resultat ergibt sich damit eine Tragestruktur für ein Frontend, welche in Fig. 5 der Einfachheit halber in der Vorderansicht ohne Darstellung der verschiedenen Kunststoffe gezeigt ist.

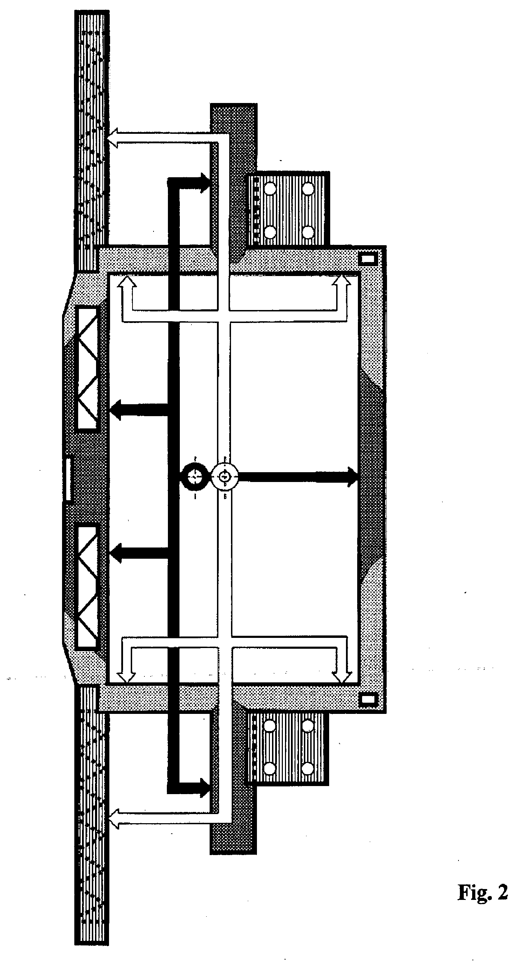

Ein Verfahren zur Herstellung eines Frontends kann unter Verwendung des in Fig. 2 gezeigten Angusssystems über ein Bi-Injektionsverfahren erfolgen. Ein solches Verfahren umfasst z.B. die folgenden Schritte:

Der Grundkörper 1 wird im Spritzgießwerkzeug weitgehend formschlüssig, bis auf die Hohlräume für die Kunststoffkomponenten A und B, aufgenommen. Die Ausfüllung der Hohlräume ergibt später die Bereiche 2 und 3 gemäß Fig. 1.

Nach dem Schließen des Spritzgießwerkzeuges injizieren die anliegenden Spritzgießeinheiten gleichzeitig die jeweiligen Kunststoffmengen für die Kunststoffkomponenten A und B. Dies ist in Fig. 2 schematisch durch verschiedene Pfeile skizziert, wobei die schwarz ausgefüllten Pfeile und die schwarz umrandeten Pfeile jeweils unterschiedliche Känale für die unterschiedlichen Kunststoffe andeuten. Jeder Kanal ist einem der Kunststoffkomponenten A oder B zugeordnet.

Die Kunststoffschmelze A und B fließt durch den Spritzdruck der jeweiligen Spritzgießeinheit in den Heißkanalverteiler zu den Heißkanaldüsen in den Kaltverteiler zum Formnest (Hohlraum). Die Heißkanaldüse könnte auch direkt auf dem Formnest anbinden. Sinnvolierweise werden Heißkanal Nadelverschlussdüsen verwendet um die Dosierung der Kunststoff Komponenten zu steuern.

Nach dem Einspritzvorgang wird üblicherweise die Kunststoffschmelze mit einem Nachdruck bis zum Siegelpunkt der Anschnitte beaufschlagt. Der Kunststoff wird über das Temperiersystem des Spritzgießwerkzeuges weiter abgekühlt.

Nach ca. 25 bis 50 sec. je nach Wanddicke und Größe des Formteils lässt sich das Werkzeug öffnen und das Mehrkomponenten-Spritzgießteil kann entformt werden. Das Resultat ist das Spritzgießteil, wie es in Fig. 5 gezeigt ist.

Bi Injektion Frontends können in einem normalen Spritzgießzyklus von 35 bis 120 sec. je nach Artikelgröße bzw. Gewicht hergestellt werden.

## Patentansprüche

1. Kraftfahrzeug-Frontend bestehend aus wenigstens einem Grundkörper (1) und wenigstens einem ersten thermoplastischen Kunststoffteil (2) und einem zweiten thermoplastischen Kunststoffteil (3), die aus unterschiedlichen Kunststoffmaterialien bestehen, **dadurch gekennzeichnet, dass** die verschiedenen Kunststoffteile (2,3) einerseits durch Spritzguss mit der Oberfläche des Grundkörpers (1) fest verbunden sind und dass gleichzeitig die verschiedenen Kunststoffteile (2,3) einen festen Verbund miteinander eingehen, wobei die beiden Kunststoffteile (2,3) beim Aufeinandertreffen in einem Bi-Injektionsverfahren miteinander verschmelzen.

2. Kraftfahrzeug-Frontend gemäß Anspruch 1, **dadurch gekennzeichnet, dass** wenigstens einer der Kunststoffe (2,3) mit dem Grundkörper (1), insbesondere mit einer Kante des Grundkörpers (1), die eine Verschiebung dieses Kunststoffteiles auf dem Grundkörper in mindestens einer Richtung vorzugsweise in Längsrichtung des Kunststoffteils (2,3) ermöglicht, eine formschlüssige Verbindung eingeht.

3. Kraftfahrzeug-Frontend gemäß der Ansprüche 1 oder 2, **dadurch gekennzeichnet, dass** die Verschmelzung der beiden verschiedenen Kunststoffe (2,3) innerhalb derselben Kavität(en) wo sie aufeinander treffen miteinander erfolgt.

4. Kraftfahrzeug-Frontend gemäß einem der Ansprüche 1 bis 3, **dadurch gekennzeichnet, dass** der Grundkörper (1) aus Metall oder einem hochfesten Kunststoffmaterial besteht.

5. Kraftfahrzeug-Frontend gemäß Anspruch 4, **dadurch gekennzeichnet, dass** als Metall für den Grundkörper (1) Stahl, Aluminium oder Magnesium oder Legierungen dieser Metalle mit anderen Metallen verwendet werden.

6. Kraftfahrzeug-Frontend gemäß einem der Ansprüche 1 bis 5, **dadurch gekennzeichnet, dass** als Kunststoffe (2,3) wenigstens ein Kunststoff aus der Reihe Polyamid, Polyester, Polypropylen oder mögliche Mischungen der genannten Polymere ausgewählt wird.

7. Kraftfahrzeug-Frontend gemäß Anspruch 6, **dadurch gekennzeichnet, dass** die zu verarbeitenden Kunststoffmaterialien (2,3) sich durch den Anteil an Füllstoffen und/oder Verstärkungsstoffen unterscheiden.

8. Kraftfahrzeug-Frontend gemäß einem der Ansprüche 1 bis 7, **dadurch gekennzeichnet, dass** ein mehrteiliger Grundkörper (1) verwendet wird, wobei durch das Spritzgießen die einzelnen Teile (4,5) des Grundkörpers über ein thermoplastisches Kunststoffteil (2,3) miteinander verbunden werden.

9. Kraftfahrzeug-Frontend gemäß Anspruch 8, **dadurch gekennzeichnet, dass** der mehrteilige Grundkörper (1) vertikale Frontendträger (5) und Anbindungsträger (4) aufweist.

10. Kraftfahrzeug-Frontend gemäß Anspruch 9, wobei das thermoplastische Kunststoffteil (2,3) einen rechteckigen Rahmen aufweist, wobei der mehrteilige Grundkörper an den vertikalen Seitenteilen des Rahmens angeordnet ist.

11. Kraftfahrzeug-Frontend gemäß Anspruch 10, wobei die vertikalen Frontendträger (5) mittig zwischen den horizontalen Seitenteilen des Rahmens angeordnet sind und wobei die Anbindungsträger (4) auf Höhe des oberen horizontalen Seitenteils des Rahmens angeordnet sind.

12. Kraftfahrzeug-Frontend gemäß Anspruch 11, ferner mit seitlichen Führungsteilen (7), wobei die Führungsteile (7) aus dem Material des zweiten thermoplastischen Kunststoffteils bestehen, wobei die Führungsteile über das Bi-Injektionsverfahren mit dem ersten thermoplastischen Kunststoffteil (2) verschmolzen sind.

13. Kraftfahrzeug-Frontend gemäß einem der vorigen Ansprüche, wobei alle Kunststoffoberflächen durchgängig mit Verstärkungsrippen versehen sind.

## Claims

1. A front end of a motor vehicle, consisting of at least one main body (1) and at least one first thermoplastic part (2) and one second thermoplastic part (3), which consist of different plastics materials, **characterised in that** the different plastics parts (2, 3) are securely connected on the one hand by injection moulding to the surface of the main body (1), and **in that** the various plastics parts are simultaneously securely connected to one another, wherein the two plastics parts (2, 3) fuse with one another when they encounter one another in a bi-injection process.

2. The front end of a motor vehicle according to Claim 1, **characterised in that** at least one of the plastics (2, 3) forms an interlocking connection with the main body (1), in particular with an edge of the main body (1), which makes it possible for this plastics part to be displaced on the main body in at least one direction, preferably in the longitudinal direction of the plastics part (2, 3).

3. The front end of a motor vehicle according to Claims 1 or 2, **characterised in that** the fusion of the two different plastics (2, 3) takes place within the same cavity or cavities where they encounter one another.

4. The front end of a motor vehicle according to one of Claims 1 to 3, **characterised in that** the main body consists of metal or a high-strength plastics material.

5. The front end of a motor vehicle according to Claim 4, **characterised in that** the metal used for the main body (1) is steel, aluminium or magnesium or alloys of these metals with other metals.

6. The front end of a motor vehicle according to one of Claims 1 to 5, **characterised in that** at least one plastic from the group consisting of polyamide, polyester, or polypropylene or possible mixtures of the polymers mentioned is selected as plastics (2, 3).

7. The front end of a motor vehicle according to Claim 6, **characterised in that** the plastics materials (2, 3) to be processed differ by the content of fillers and/or reinforcing substances.

8. The front end of a motor vehicle according to one of Claims 1 to 7, **characterised in that** a multipart main body (1) is used, wherein the individual parts (4, 5) of the main body are connected to one another by the injection-moulding process via a thermoplastic part (2, 3).

9. The front end of a motor vehicle according to Claim 8, **characterised in that** the multipart main body (1) has vertical front-end supports (5) and connection supports (4).

10. The front end of a motor vehicle according to Claim 9, **characterised in that** the thermoplastic part (2, 3) has a rectangular frame, wherein the multipart main body is arranged on the vertical side parts of the frame.

11. The front end of a motor vehicle according to Claim 10, **characterised in that** the vertical front-end supports (5) are arranged centrally between the horizontal side parts of the frame, and wherein the connection supports (4) are arranged level with the upper horizontal side part of the frame.

12. The front end of a motor vehicle according to Claim 11, furthermore having lateral guide parts (7), wherein the guide parts (7) consist of the material of the second thermoplastic part, and wherein the guide parts are fused with the first thermoplastic part (2) via the bi-injection process.

13. The front end of a motor vehicle according to one of the preceding claims, wherein all plastics surfaces are provided continuously with reinforcing ribs.

## Revendications

1. Train avant d'un véhicule à moteur, constitué d'au moins un corps principal (1), d'au moins une première pièce thermoplastique (2) et d'au moins une deuxième pièce thermoplastique (3), qui sont constituées de différentes matières plastiques, **caractérisé en ce que** les différentes pièces plastiques (2, 3) sont connectées de façon sûre d'une part par moulage par injection à la surface du corps principal (1), et **en ce que** les diverses pièces plastiques sont simultanément connectées de façon sûre l'une à l'autre, les deux pièces plastiques (2, 3) fusionnant l'une avec l'autre lorsqu'elles se rencontrent dans un processus d'injection bi-matière.

2. Train avant d'un véhicule à moteur conforme à la Revendication 1, **caractérisé en ce qu'**au moins l'un des plastiques (2, 3) forme une connexion interverrouillée avec le corps principal (1), en particulier avec un bord du corps principal (1), ce qui rend possible le déplacement de cette pièce plastique sur le corps principal dans au moins une direction, préférentiellement dans la direction longitudinale de la pièce plastique (2, 3).

3. Train avant d'un véhicule à moteur conforme aux Revendications 1 ou 2, **caractérisé en ce que** la fusion des deux plastiques différents (2, 3) a lieu au sein de la même cavité ou des mêmes cavités lorsqu'elles se rencontrent mutuellement.

4. Train avant d'un véhicule à moteur conforme à l'une des Revendications 1 à 3, **caractérisé en ce que** le corps principal est constitué d'un métal ou d'une matière plastique de résistance élevée.

5. Train avant d'un véhicule à moteur conforme à la Revendication 4, **caractérisé en ce que** le métal employé dans le corps principal (1) est l'acier, l'aluminium ou le magnésium ou des alliages de ces métaux avec d'autres métaux.

6. Train avant d'un véhicule à moteur conforme à l'une des Revendications 1 à 5, **caractérisé en ce qu'**au moins un plastique du groupe constitué par le polyamide, le polyester ou le polypropylène, ou les mélanges possibles des polymères mentionnés, est choisi au titre de plastique (2, 3).

7. Train avant d'un véhicule à moteur conforme à la Revendication 6, **caractérisé en ce que** les matières plastiques (2, 3) à traiter diffèrent par leur contenu en charges et/ou en substances de renfort.

8. Train avant d'un véhicule à moteur conforme à l'une des Revendications 1 à 7, **caractérisé en ce qu'**un corps principal multi-éléments (1) est employé, les pièces individuelles (4, 5) du corps principal étant connectées l'une à l'autre par le processus de moulage par injection via une pièce thermoplastique (2, 3).

9. Train avant d'un véhicule à moteur conforme à la Revendication 8, **caractérisé en ce que** le corps principal multi-éléments (1) comporte des soutiens de train avant verticaux (5) et des soutiens de connexion (4).

10. Train avant d'un véhicule à moteur conforme à la Revendication 9, **caractérisé en ce que** la pièce thermoplastique (2, 3) comporte un cadre rectangulaire, le corps principal multi-éléments étant disposé sur les pièces du côté vertical du cadre.

11. Train avant d'un véhicule à moteur conforme à la Revendication 10, **caractérisé en ce que** les soutiens de train avant verticaux (5) sont disposés de façon centrale entre les pièces du côté horizontal du cadre, et où les soutiens de connexion (4) sont disposés de sorte à être alignés avec la pièce du côté horizontal supérieur du cadre.

12. Train avant d'un véhicule à moteur conforme à la Revendication 11, comportant en outre des pièces de guidage latéral (7), où les pièces de guidage (7) sont constituées de la matière de la deuxième pièce thermoplastique, et où les pièces de guidage sont fusionnées à la première pièce thermoplastique (2) via le processus d'injection bi-matière.

13. Train avant d'un véhicule à moteur conforme à l'une des revendications précédentes, où toutes les surfaces plastiques sont produites en continu avec des nervures de renfort.
